# DEMANDE DE BREVET EUROPEEN

(11) **EP 1 009 057 A1**
(43) Date de publication de la demande: **14.06.2000**
(21) Numéro de dépôt: 99403085.6
(22) Date de dépôt: 09.12.1999
(51) Int. Cl.: H01M 10/40, H01M 4/62

(54) **Générateur électrochimique rechargeable au lithium utilisable à basse temperature**

(30) Priorité: 10.12.1998 FR 9815576
(71) Demandeur: ALCATEL, 75008 Paris (FR)
(72) Inventeur: Herreyre, Sylvie, 91360 Epinay sur Orge (FR); Biensan, Philippe, 33360 Carignan (FR); Perton, Françoise, 86190 Beruges (FR); Barusseau, Sylvie, 91220 Bretigny S/Orge (FR)
(74) Mandataire: Laroche, Danièle

(57) **Abrégé**

La présente invention a pour objet un générateur électrochimique rechargeable au lithium comprenant un électrolyte contenant un sel de lithium dissous dans un solvant non-aqueux, au moins une électrode positive et au moins une électrode négative de type empâté contenant un liant qui est un polymère exempt de fluor et une matière électrochimiquement active qui est un carbone apte à insérer des ions lithium, caractérisé en ce que ledit solvant contient au moins un carbonate cyclique saturé, au moins un carbonate cyclique insaturé, et au moins un ester linéaire d'un acide monocarboxylique aliphatique saturé.

## Description

La présente invention concerne un générateur électrochimique rechargeable au lithium utilisable à basse température.

Un générateur électrochimique au lithium possède un faisceau électrochimique qui comporte une électrode positive comprenant une matière électrochimiquement active capable d'insérer du lithium dans sa structure, (généralement un oxyde de métal de transition le plus souvent lithié) et une électrode négative fournissant les ions lithium. Les électrodes sont placées de par et d'autre d'une membrane séparatrice généralement en polyoléfine. Le faisceau électrochimique est imprégné d'un électrolyte non aqueux solide ou liquide. L'électrolyte contient un sel de lithium dissous dans un mélange de solvants organiques.

Le fonctionnement à basse température de ces générateurs a été fréquemment étudié. L'effort se porte principalement sur la composition de l'électrolyte.

Dans ce but, le document EP-0 482 287 suggère d'utiliser un générateur électrochimique rechargeable au lithium possédant une anode comprimée contenant du carbone, une cathode comprenant un oxyde lithié, et un électrolyte comportant un sel de lithium dissous dans un solvant organique comprenant un ester cyclique et un ester linéaire.

Les générateurs électrochimiques rechargeables au lithium les plus récents possèdent une électrode négative de type empâté comportant un support conducteur servant de collecteur de courant, sur lequel est déposée une pâte contenant un liant et une matière électrochimiquement active qui est un carbone capable d'insérer réversiblement du lithium dans sa structure. La sécurité accrue de ces générateurs permet de multiplier leurs applications. Pour leur utilisation notamment dans un véhicule électrique ou dans les radiocommunications, ils doivent être capables de fonctionner à basse température, notamment en dessous de -20°C.

Un générateur électrochimique rechargeable à anode de carbone décrit dans le document JP-09 022 738, contient un électrolyte dont le solvant comprend un carbonate cyclique, un carbonate linéaire et jusqu'à 44% en volume d'acétate d'éthyle. Les électrodes ont comme liant le polyfluorure de vinylidène et la matière active cathodique est un oxyde de cobalt lithié. Ce générateur possède des performances améliorées à basse température. Ce document mentionne une baisse de la performance à basse température lorsqu'on utilise le propionate de méthyle ou le propionate d'éthyle comme solvant.

On peut augmenter la capacité déchargée d'un générateur électrochimique rechargeable au lithium selon le document EP-0 531 617. Le générateur comprend une anode de carbone et une cathode d'oxyde lithié. Le solvant de l'électrolyte est un mélange d'un carbonate cyclique, d'un carbonate linéaire, et d'un composé de formule RCOOR1 où R est un radical éthyle et R1 est un groupe alkyl de 1 à 3 atomes de carbone. Les proportions volumiques respectives sont de préférence 20 à 50%, 10 à 70%, et 10 à 70%.

Le document EP-0 614 240 décrit un générateur électrochimique rechargeable au lithium à anode de carbone et cathode d'oxyde métallique dont la décharge en régime rapide est améliorée, notamment à basse température. Le générateur contient un électrolyte comprenant un sel de lithium et un mélange de solvants aprotiques composé en volume de 10 à 20% de carbonate d'éthylène, 5 à 40% de carbonate de propylène, et 50 à 85% de carbonate de diméthyle.

Pour améliorer la décharge en régime rapide à basse température, le document EP-0 766 332 propose un générateur électrochimique comprenant des électrodes empâtées dont le liant est le polyfluorure de vinylidène (PVDF). Il comporte une anode comprenant une matière électrochimiquement active à base de carbone et une cathode d'oxyde de cobalt. Le solvant de l'électrolyte se compose en volume de 50 à 60% d'un mélange d'un carbonate cyclique et d'un ester cyclique, de 20 à 40% d'un carbonate linéaire et de 10 à 25% d'un ester linéaire.

L'autodécharge au cours du stockage à basse température est diminuée dans un générateur électrochimique rechargeable au lithium comprenant une anode de carbone à liant acrylique, une cathode d'oxyde lithié EP-0 548 449. Le solvant de l'électrolyte est un mélange de trois composants qui sont un carboxylate aliphatique, un carbonate cyclique et un carbonate linéaire. Les proportions volumiques respectives sont de préférence 10 à 80%, 20 à 50%, et inférieure ou égale à 70%.

La présente invention a pour but de proposer un générateur électrochimique rechargeable au lithium à anode de carbone dont les performances en fonctionnement à basse température sont supérieures à celles des générateurs connus.

L'objet de la présente invention est un générateur électrochimique rechargeable au lithium comprenant un électrolyte contenant un sel de lithium dissous dans un solvant non-aqueux, au moins une électrode positive et au moins une électrode négative de type empâté contenant un liant qui est un polymère exempt de fluor et une matière électrochimiquement active qui est un carbone apte à insérer des ions lithium, caractérisé en ce que ledit solvant contient au moins un carbonate cyclique saturé, au moins un carbonate cyclique insaturé, et au moins un ester linéaire d'un acide monocarboxylique aliphatique saturé.

On entend par ester linéaire d'un acide monocarboxylique aliphatique saturé, ou carboxylate aliphatique saturé, un composé de formule R-CO-OR' dans laquelle R est H ou un groupe alkyl et R' est un groupe alkyl comme CH₃ (méthyle), CH₃-CH₂ (éthyle), etc... Ledit ester linéaire d'un acide monocarboxylique aliphatique saturé est par exemple un formiate si R est H, un acétate si R est CH₃, un propionate si R est CH₃-CH₂, un butyrate si R est CH₃-(CH₂)₂, un valériate si R est CH₃-(CH₂)₃, etc...

Ledit ester linéaire est choisi parmi un acétate, un butyrate, et un propionate et les mélanges de ceux-ci. On choisira par exemple un acétate d'éthyle, un acétate de méthyle, un acétate de propyle, un butyrate d'éthyle, un butyrate de méthyle, un butyrate de propyle, un propionate d'éthyle, un propionate de méthyle, un propionate de propyle.

Selon une première variante, ledit ester linéaire est l'acétate d'éthyle.

Selon une deuxième variante, ledit ester linéaire est le butyrate de méthyle.

Ledit carbonate cyclique saturé est choisi parmi le carbonate de propylène, le carbonate d'éthylène, et le carbonate de butylène, et les mélanges de ceux-ci.

Selon une première variante, ledit carbonate cyclique saturé est le carbonate d'éthylène.

Selon une deuxième variante, ledit carbonate cyclique saturé est le carbonate de propylène.

Selon une troisième variante, ledit carbonate cyclique saturé est un mélange de carbonate d'éthylène et de carbonate de propylène.

Dans le solvant, la proportion volumique dudit carbonate cyclique saturé est comprise entre 5% et 60% dudit solvant et la proportion volumique dudit ester linéaire est comprise entre 20% et 85% dudit solvant. De préférence la proportion dudit ester linéaire est au moins égale à 50% dudit solvant.

Ledit carbonate cyclique insaturé est choisi parmi le carbonate de vinylène et ses dérivés, notamment le carbonate de propylidène, le carbonate d'éthylidène éthylène, le carbonate d'isopropylidène éthylène. De préférence, ledit carbonate linéaire insaturé est le carbonate de vinylène.

On entend par dérivés du carbonate de vinylène, des composés possédant au moins une liaison insaturée reliée à un atome de carbone du cycle, comme par exemple le carbonate de propylidène, le carbonate d'éthylidène éthylène (ou 4-éthylidène 1-3 dioxolane 2 one), ou le carbonate d'isopropylidène éthylène (ou 4-isopropylidène 1-3 dioxolane 2 one).

La proportion volumique dudit carbonate cyclique insaturé est au plus de 60% dudit solvant. Lorsque le solvant en contient, la proportion volumique dudit carbonate cyclique insaturé est de préférence comprise entre 0,5% et 10% dudit solvant.

Selon une autre forme d'exécution de l'invention, ledit solvant comprend en outre un carbonate linéaire saturé.

Ledit carbonate linéaire saturé est choisi parmi le carbonate de diméthyle, le carbonate de diéthyle, le carbonate de méthyle éthyle, le carbonate de méthyle propyle, et les mélanges de ceux-ci. De préférence, ledit carbonate linéaire saturé est le carbonate de diméthyle.

La proportion volumique dudit carbonate linéaire est au plus de 40% dudit solvant. Lorsque le solvant en contient, la proportion volumique dudit carbonate linéaire est de préférence comprise entre 5% et 40% dudit solvant.

Selon un premier mode de réalisation de l'invention, ledit liant contient un élastomère.

De préférence, ledit élastomère est choisi parmi un copolymère d'acrylonitrile et de butadiène et un copolymère de styrène et de butadiène.

La proportion pondérale dudit élastomère est comprise entre 30% et 70% dudit liant.

Selon un deuxième mode de réalisation de l'invention, ledit liant contient un composé cellulosique.

De préférence, ledit composé cellulosique est une carboxyméthylcellulose de poids moléculaire moyen supérieur à environ 200 000.

La proportion pondérale dudit composé cellulosique est comprise entre 30% et 70% dudit liant.

Selon un troisième mode de réalisation de l'invention, ledit liant est composé du mélange d'un élastomère et d'un composé cellulosique.

Selon une première variante, ledit liant est composé du mélange d'un copolymère d'acrylonitrile et de butadiène et de carboxyméthylcellulose de poids moléculaire moyen supérieur à environ 200 000.

Selon une deuxième variante, ledit liant est composé du mélange d'un copolymère de styrène et de butadiène et de carboxyméthylcellulose de poids moléculaire moyen supérieur à environ 200 000.

Dans le liant, la proportion pondérale dudit élastomère est comprise entre 30% et 70% dudit liant et la proportion pondérale dudit composé cellulosique est comprise entre 30% et 70% dudit liant.

De préférence, la proportion pondérale dudit élastomère est comprise entre 50% et 70% dudit liant et la proportion pondérale dudit composé cellulosique est comprise entre 30% et 50% dudit liant.

Selon un quatrième mode de réalisation de l'invention, ledit liant contient un polymère acrylique.

De préférence, ledit polymère est un homopolymère de l'acide acrylique.

La proportion pondérale dudit polymère acrylique est comprise entre 20% et 60% dudit liant.

Selon un cinquième mode de réalisation de l'invention, ledit liant est composé du mélange d'un élastomère et d'un polymère acrylique.

Selon une première variante, ledit liant est composé du mélange d'un copolymère d'acrylonitrile et de butadiène et d'un homopolymère de l'acide acrylique.

Selon une deuxième variante, ledit liant est composé du mélange d'un copolymère de styrène et de butadiène et d'un homopolymère de l'acide acrylique.

Dans le liant, la proportion pondérale dudit élastomère est comprise entre 40% et 80% dudit liant et la proportion pondérale dudit polymère acrylique est comprise entre 20% et 60% dudit liant.

Le générateur selon l'invention comporte une électrode négative empâtée comprenant un support conducteur et une couche active qui contient la matière active et le liant.

Le support conducteur peut être un support bidimensionnel, comme un feuillard plein ou perforé, un métal déployé, une grille ou un tissu, ou bien un support tridimensionnel, comme un feutre ou une mousse dont les fibres sont métalliques, métallisée ou de carbone.

La matière active est un matériau susceptible d'insérer des ions lithium à bas potentiel (c'est à dire ne dépassant pas 1,5V). Ce matériau est de préférence choisi parmi les carbones cristallisés, comme le graphite en poudre ou en fibres, les carbones peu cristallisés graphitables, comme le coke, les carbones peu cristallisés non graphitables, comme le carbone vitreux et le noir de carbone, et leurs mélanges.

Le générateur selon l'invention comporte une électrode positive dont la matière active est un matériau susceptible d'insérer des ions lithium à haut potentiel (c'est à dire au moins 2,5V). Ce matériau est de préférence choisi parmi un oxyde lithié de métal de transition, comme le nickel, le cobalt, le manganèse, le vanadium et le fer, un sulfure, un sulfate et leurs mélanges.

Le générateur selon l'invention contient un électrolyte liquide ou solide contenant un sel de lithium. De préférence le sel de lithium est choisi parmi le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂ (LiTFSI), ou le trifluorométhanesulfoneméthide de lithium LiC(CF₃SO₂)₃ (LiTFSM)

La présente invention a aussi pour objet l'utilisation du générateur selon l'invention à des très basses températures, c'est à dire des températures inférieures ou égales à -20°C.

D'autres caractéristiques et avantages de la présente invention apparaîtront au cours des exemples suivants de réalisation, donnés bien entendu à titre illustratif et non limitatif.

### EXEMPLE 1

On prépare un générateur électrochimique rechargeable au lithium, de format 4/5 A, comportant une électrode positive au nickel, une électrode négative de carbone, un séparateur et un électrolyte non aqueux.

L'électrode positive est de type empâté sur un feuillard d'aluminium. La pâte contient la matière électrochimiquement active qui est un oxyde de nickel lithié substitué LiNiMO₂ (où M est au moins un élément dopant), un liant qui est le polyfluorure de vinylidène (PVDF), et un matériau conducteur à base de carbone.

L'électrode négative est de type empâté sur un feuillard de cuivre. La pâte contient 85% en poids de matière électrochimiquement active qui est un mélange de carbones graphités et/ou de graphites, et 15% en poids d'un liant qui est le polyfluorure de vinylidène (PVDF).

On place un séparateur microporeux de polyoléfine entre les électrodes pour former un faisceau électrochimique. On spirale ce faisceau et on obtient un bobineau que l'on introduit dans un godet métallique. On imprègne le faisceau électrochimique avec l'un des électrolytes suivants :

| | | |
|---|---|---|
| générateur 1a | EC/PC/DMC | 20/20/60 |
| générateur 1b | EC/PC/DMC/VC | 19/19/57/5 |
| générateur 1c | EC/EA | 50/50 |
| générateur 1d | EC/PC/EA | 15/25/60 |
| générateur 1e | EC/DMC/EA | 15/25/60 |

### EXEMPLE 2

On prépare un générateur électrochimique rechargeable au lithium analogue au générateur de l'exemple 1, à l'exception du fait qu'il comporte une électrode négative de carbone de type empâté sur un feuillard de cuivre. La pâte contient 96% en poids de matière électrochimiquement active qui est un mélange de carbones graphités et/ou de graphites, et 4% en poids d'un liant qui est un mélange équipondéral d'un copolymère d'acrylonitrile et de butadiène (2% en poids de NBR) et de carboxyméthylcellulose (2% en poids de CMC) de poids moléculaire moyen au moins égal à 200 000. Le faisceau électrochimique est imprégné avec l'un des électrolytes suivants :

| | | |
|---|---|---|
| générateur 2a | EC/PC/DMC/VC | 19/19/57/5 |
| générateur 2b | EC/DMC/EA/VC | 14/24/57/5 |

### EXEMPLE 3

On prépare un générateur électrochimique rechargeable au lithium analogue au générateur de l'exemple 2, à l'exception du fait que le liant de l'électrode négative est un mélange équipondéral d'un copolymère de styrène et de butadiène (2% en poids de SBR) et de carboxyméthylcellulose (2% en poids de CMC) de poids moléculaire moyen au moins égal à 200 000. Le faisceau électrochimique est imprégné avec l'un des électrolytes suivants :

| | | |
|---|---|---|
| générateur 3a | EC/PC/DMC/VC | 19/19/57/5 |
| générateur 3b | EC/DMC/EA/VC | 14/24/57/5 |

On effectue l'évaluation électrochimique des générateurs des exemples 1 à 3 à l'aide des tests suivants.

### Test de cyclage à température ambiante (25°C) en régime rapide :

On effectue un premier cycle en régime normal afin de déterminer les caractéristique des générateurs :
- première charge à un régime de 0,5 I_{c} (où I_{c} est le courant nécessaire à la décharge de la capacité nominale Cn dudit accumulateur en une heure) pendant 3 heures,
- première décharge à 0,2 Ic jusqu'à une tension de 2,7 Volts.

On mesure la capacité déchargée initialement Ci en milliAmpères-heure par gramme de matière active positive au cours de la première décharge en régime normal à 25°C.

Ensuite on effectue le cyclage en régime rapide :
- charge à un régime de 0,5 Ic pendant 3 heures,
- décharge à Ic jusqu'à 2,7V.

On mesure les capacités déchargées au cours des décharges des cycles 50 et 200. Ces mesures permettent de calculer la perte de capacité F₅₀ et F₂₀₀, en % par cycle, respectivement après 50 cycles et après 200 cycles.

### Test de stockage :

On effectue un premier cycle afin de mesurer la capacité déchargée initialement Ci en mAh/g de matière active positive :
- charge à un régime de 0,5 Ic pendant 3 heures,
- décharge à 0,2 Ic jusqu'à 2,7V.

Puis la succession des opérations suivantes est effectuée quatre fois de suite avant d'effectuer les mesures :
- charge à un régime de Ic pendant 3 heures,
- stockage de 8 jours à 40°C,
- décharge à 0,2 Ic jusqu'à 2,7V.

On mesure la perte de capacité S, exprimée en % de Ci, au cours de la décharge qui suit le quatrième stockage.

Les résultats des tests ci-dessus sont donnés dans le tableau 1 ci-dessous.

**TABLEAU 1**

| Réf. | Electrolyte | Liant | Ci | F₅₀ | F₂₀₀ | S |
|---|---|---|---|---|---|---|
| 1a | EC/PC/DMC 20/20/60 | PVDF | 139 | 0,3 | 0,12 | 10,9 |
| 1c | EC/EA 50/50 | PVDF | 149 | 0,45 | 0,31 | 25 |
| 1d | EC/PC/EA 15/25/60 | PVDF | 150 | 1 | 0,36 | 30,8 |
| 1e | EC/DMC/EA 15/25/60 | PVDF | 137 | | | 15,4 |
| 2a | EC/PC/DMC/VC 19/19/57/5 | NBR + CMC | 144 | 0,10 | 0,03 | 1 |
| 2b | EC/DMC/EA/VC 14/24/57/5 | NBR + CMC | 144 | 0,09 | 0,03 | 1 |
| 3a | EC/PC/DMC/VC 19/19/57/5 | SBR + CMC | 144 | 0,09 | 0,03 | |
| 3b | EC/DMC/EA/VC 14/24/57/5 | SBR + CMC | 145 | 0,10 | | |

Dans le cas où le liant de l'électrode négative est le PVDF, les générateurs 1c, 1d et 1e présentent des pertes de capacité en cyclage à température ambiante et en stockage plus importantes que le générateur 1a.

A température ambiante, les générateurs 2b et 3b ayant un liant d'électrode négative exempt de fluor (élastomère + CMC) selon l'invention ont une capacité initiale, et une stabilité en cyclage et en stockage bien supérieures à celles des générateurs selon l'art antérieur dont le liant négatif est le PVDF.

### Test de cyclage à basse température :

On effectue le test de la matière suivante :
- charge à un régime de 0,5 Ic pendant 3 heures,
- décharge à 0,2 Ic, 0,5 Ic, Ic ou 2 Ic jusqu'à une tension de 2 Volts.

On mesure la capacité déchargée initialement Ci en mAh/g au cours de la première décharge. Puis on mesure les capacités déchargées C_{-20°C} et C_{-30°C} respectivement à -20°C et à -30°C, exprimées en % de Ci à température ambiante, pour les différents régimes de décharge.

Les résultats sont donnés dans le tableau 2 ci-dessous.

**TABLEAU 2**

| Réf. | Electrolyte | Liant | Ci | C_{-20°C} (% Ci) | | | | C_{-30°C} (% Ci) | | | |
|---|---|---|---|---|---|---|---|---|---|---|---|
| | | | | 0,2 Ic | 0,5 Ic | Ic | 2 Ic | 0,2 Ic | 0,5 Ic | Ic | 2 Ic |
| 1b | EC/PC/DMC/VC 19/19/57/5 | PVDF | 140 | 64 | | 18 | 0 | 20 | | 0 | 0 |
| 1d | EC/PC/EA 15/25/60 | PVDF | 142 | 42 | | 24 | 2 | 29 | | 2 | 0 |
| 1e | EC/DMC/EA 15/25/60 | PVDF | 145 | 49 | | 28 | 10 | 57 | | 18 | 0 |
| 2a | EC/PC/DMC/VC 19/19/57/5 | NBR/ CMC | 145 | | 71 | 46 | 10 | | 38 | 0 | 0 |
| 2b | EC/DMC/EA/VC 14/24/57/5 | NBR/ CMC | 144 | | 74 | 77 | 62 | | 57 | 71 | 47 |
| 3b | EC/DMC/EA/VC 14/24/57/5 | SBR/ CMC | 145 | | | | | | 58 | 68 | |

Dans le cas où le liant de l'électrode négative serait le PVDF, les générateurs 1d et 1e ont une capacité déchargée plus élevée à basse température, notamment en régime rapide, que le générateur 1a. Dans des conditions difficiles (-30°C, Ic) la capacité déchargée est de 18% dans le meilleur des cas.

Dans le cas où le liant de l'électrode négative est un mélange élastomère + CMC, on observe des résultats supérieurs à précédemment à -20°C pour le générateur 2b.

De manière surprenante, lorsqu'on associe une électrode contenant un liant négatif élastomère + CMC à un électrolyte contenant de l'acétate d'éthyle et du carbonate de vinylène dans les générateurs 2b et 3b selon l'invention, on obtient des résultats très supérieurs. En effet dans des conditions les plus extrêmes (-30°C, 2 Ic) près de la moitié de la capacité de ce générateur est encore utilisable.

### EXEMPLE 4

On prépare un générateur électrochimique rechargeable au lithium analogue au générateur de l'exemple 2, à l'exception du fait que la matière électrochimiquement active de l'électrode positive est un oxyde de cobalt lithié LiCoO₂. Le faisceau électrochimique est imprégné avec l'un des électrolytes suivants :

| | | |
|---|---|---|
| générateur 4a | EC/DMC/DEC/VC | 38/38/19/5 |
| générateur 4b | EC/DMC/EA/VC | 15/25/59/1 |
| générateur 4c | EC/DMC/EA/VC | 14/24/57/5 |
| générateur 4d | EC/PC/MB/VC | 19/19/57/5 |

On effectue l'évaluation électrochimique du générateur à l'aide des tests décrits précédemment.

Pour le test de cyclage à température ambiante (25°C) en régime rapide et le test de stockage, les résultats sont donnés dans le tableau 3 ci-dessous.

**TABLEAU 3**

| Réf. | Electrolyte | Liant | Ci | F₅₀ | F₂₀₀ | S |
|---|---|---|---|---|---|---|
| 4a | EC/DMC/DEC/VC 38/38/19/5 | NBR + CMC | 128 | 0,04 | 0,03 | 10 |
| 4b | EC/DMC/EA/VC 15/25/59/1 | NBR + CMC | 124 | 0,16 | | |
| 4c | EC/DMC/EA/VC 14/24/57/5 | NBR + CMC | 129 | 0,05 | 0,05 | 10 |
| 4d | EC/PC/MB/VC 19/19/57/5 | NBR + CMC | 128 | 0,05 | 0,05 | 7 |

On observe que les performances en cyclage à température ambiante et en stockage sont du même ordre pour les générateurs 4a, 4c et 4d testés. Les performances du générateur 4b sont un peu inférieures.

Les résultats du test de cyclage à basse température sont donnés dans le tableau 4 ci-dessous.

**TABLEAU 4**

| Réf. | Electrolyte | Liant | Ci | C_{-20°C} | C_{-30°C} | | C_{-40°C} | |
|---|---|---|---|---|---|---|---|---|
| | | | | 0,2Ic | 0,2 Ic | Ic | 0,2 Ic | Ic |
| 4a | EC/DMC/DEC/VC 38/38/19/5 | NBR + CMC | 129 | 86 | 0 | 0 | 0 | 0 |
| 4b | EC/DMC/EA/VC 15/25/59/1 | NBR + CMC | 125 | 100 | | | | |
| 4c | EC/DMC/EA/VC 14/24/57/5 | NBR + CMC | 129 | 100 | 94 | 99,7 | 76 | 0 |
| 4d | EC/PC/MB/VC 19/19/57/5 | NBR + CMC | 128 | 100 | 94 | 99 | 77 | 0 |

Les générateurs 4b, 4c et 4d donnent de meilleurs résultats dès -20°C que le générateur 4a ; à -40°C ils fournissent encore plus des trois-quarts de leur capacité initiale à température ambiante.

## Revendications

1. Générateur électrochimique rechargeable au lithium comprenant un électrolyte contenant un sel de lithium dissous dans un solvant non-aqueux, au moins une électrode positive et au moins une électrode négative de type empâté contenant un liant qui est un polymère exempt de fluor et une matière électrochimiquement active qui est un carbone apte à insérer des ions lithium, caractérisé en ce que ledit solvant contient au moins un carbonate cyclique saturé, au moins un carbonate cyclique insaturé, et au moins un ester linéaire d'un acide monocarboxylique aliphatique saturé.

2. Générateur selon la revendication 1, dans lequel ledit ester linéaire est choisi parmi un acétate, un butyrate, un propionate, et un mélange de ceux-ci.

3. Générateur selon la revendication 2, dans lequel ledit ester linéaire est l'acétate d'éthyle.

4. Générateur selon la revendication 2, dans lequel ledit ester linéaire est le butyrate de méthyle.

5. Générateur selon l'une des revendications précédentes, dans lequel ledit carbonate cyclique saturé est choisi parmi le carbonate de propylène, le carbonate d'éthylène, et le carbonate de butylène, et les mélanges de ceux-ci.

6. Générateur selon la revendication 5, dans lequel ledit carbonate cyclique saturé est le carbonate d'éthylène.

7. Générateur selon l'une des revendications précédentes, dans lequel la proportion volumique dudit carbonate cyclique saturé est comprise entre 5 et 60% dudit solvant et la proportion volumique dudit ester linéaire est comprise entre 20 et 85% dudit solvant.

8. Générateur selon la revendication 7, dans lequel la proportion volumique dudit ester linéaire est au moins égale à 50% dudit solvant.

9. Générateur selon l'une des revendications précédentes, dans lequel ledit carbonate cyclique insaturé est choisi parmi le carbonate de vinylène, le carbonate de propylidène, le carbonate d'éthylidène éthylène, le carbonate d'isopropylidène éthylène.

10. Générateur selon la revendication 9, dans lequel ledit carbonate linéaire insaturé est le carbonate de vinylène.

11. Générateur selon l'une des revendications précédentes, dans lequel la proportion volumique dudit carbonate cyclique insaturé est au plus de 60% dudit solvant.

12. Générateur selon la revendication 11, dans lequel la proportion volumique dudit carbonate cyclique insaturé est comprise entre 0,5% et 10% dudit solvant

13. Générateur selon l'une des revendications précédentes, dans lequel ledit solvant comprend en outre un carbonate linéaire saturé.

14. Générateur selon la revendication 13, dans lequel ledit carbonate linéaire saturé est choisi parmi le carbonate de diméthyle, le carbonate de diéthyle, le carbonate de méthyle éthyle, le carbonate de méthyle propyle, et les mélanges de ceux-ci.

15. Générateur selon l'une des revendications 13 et 14, dans lequel ledit carbonate linéaire saturé est le carbonate de diméthyle.

16. Générateur selon l'une des revendications 13 à 15, dans lequel la proportion volumique dudit carbonate linéaire est au plus de 40% dudit solvant.

17. Générateur selon l'une des revendications 1 à 16, dans lequel ledit liant contient un élastomère.

18. Générateur selon la revendication 17, dans lequel ledit élastomère est choisi parmi un copolymère d'acrylonitrile et de butadiène et un copolymère de styrène et de butadiène.

19. Générateur selon l'une des revendications 17 et 18, dans lequel la proportion pondérale dudit élastomère est comprise entre 30 et 70% dudit liant.

20. Générateur selon l'une des revendications 1 à 16, dans lequel ledit liant contient un composé cellulosique.

21. Générateur selon la revendication 20, dans lequel ledit composé cellulosique est une carboxyméthylcellulose de poids moléculaire moyen supérieur à environ 200 000.

22. Générateur selon l'une des revendications 20 et 21, dans lequel la proportion pondérale dudit composé cellulosique est comprise entre 30 et 70% dudit liant.

23. Générateur selon l'une des revendications 1 à 16, dans lequel ledit liant est composé du mélange d'un élastomère et d'un composé cellulosique.

24. Générateur selon la revendication 23, dans lequel ledit liant est composé du mélange d'un copolymère d'acrylonitrile et de butadiène et de carboxyméthylcellulose de poids moléculaire moyen supérieur à environ 200 000.

25. Générateur selon la revendication 23, dans lequel ledit liant est composé du mélange d'un copolymère de styrène et de butadiène et de carboxyméthylcellulose de poids moléculaire moyen supérieur à environ 200 000.

26. Générateur selon l'une des revendications 23 à 25, dans lequel la proportion pondérale dudit élastomère est comprise entre 30 et 70% dudit liant et la proportion pondérale dudit composé cellulosique est comprise entre 30 et 70% dudit liant.

27. Générateur selon la revendication 26, dans lequel la proportion pondérale dudit élastomère est comprise entre 50 et 70% dudit liant et la proportion pondérale dudit composé cellulosique est comprise entre 30 et 50% dudit liant.

28. Générateur selon l'une des revendications 1 à 16, dans lequel ledit liant contient un polymère acrylique.

29. Générateur selon la revendication 28, dans lequel ledit polymère est un homopolymère de l'acide acrylique.

30. Générateur selon l'une des revendications 28 et 29, dans lequel la proportion pondérale dudit polymère acrylique est comprise entre 20% et 60% dudit liant.

31. Générateur selon l'une des revendications 1 à 16, dans lequel ledit liant est composé du mélange d'un élastomère et d'un polymère acrylique.

32. Générateur selon la revendication 31, dans lequel ledit liant est composé du mélange d'un copolymère d'acrylonitrile et de butadiène et d'un homopolymère de l'acide acrylique.

33. Générateur selon la revendication 31, dans lequel ledit liant est composé du mélange d'un copolymère de styrène et de butadiène et d'un homopolymère de l'acide acrylique.

34. Générateur selon l'une des revendications 31 à 33, dans lequel la proportion pondérale dudit élastomère est comprise entre 40% et 80% dudit liant et la proportion pondérale dudit polymère acrylique est comprise entre 20% et 60% dudit liant.

35. Utilisation du générateur selon l'une des revendications précédentes, à des températures inférieures ou égales à -20°C.
